# EUROPÄISCHE PATENTANMELDUNG

(11) **EP 1 085 642 A2**
(43) Veröffentlichungstag der Anmeldung: **21.03.2001**
(21) Anmeldenummer: 00117967.0
(22) Anmeldetag: 22.08.2000
(51) Int. Cl.: H02K 7/18

(54) **Einrichtung zur Erzeugung von Strom aus der Energie strömenden Wassers**

(30) Priorität: 17.09.1999 DE 19944660
(71) Anmelder: ABB PATENT GmbH, 68309 Mannheim (DE)
(72) Erfinder: Holder, Karl Ludwig, 74889 Sinsheim (DE); Dorweiler, Harald, 67105 Schifferstadt (DE)
(74) Vertreter: Miller, Toivo

(57) **Zusammenfassung**

Bei derartigen, beispielsweise als Gezeitenkraftwerk ausgebildeten Einrichtungen, lassen sich wegen der relativ niedrigen Turbinendrehzahl, keine hohen Wirkungsgrade erzielen. Damit eine derartige Einrichtung ohne Turbinen auskommt, ist ein Rahmengestell (8) unter der Wasseroberfläche angeordnet, dessen Längsrahmen (9) Spulenwicklungen tragen. Jedem Rahmengestell sind zwei gegenüberliegende mit Magneten (16) bestückte Wagen (12) zugeordnet, die einen um zirka 90 Grad kippbaren Flügel (14) zwischen sich aufnehmen. Die Wagen (12) sind relativ zu den Längsrahmen (9) zwischen den Positionen A und B bewegbar, wobei der Flügel (14) abwechselnd die Richtung parallel oder senkrecht zur Längsachse (23) des Rahmengestells (8) einnimmt.

## Beschreibung

Die Erfindung betrifft eine Einrichtung zur Erzeugung von Strom aus der Energie strömenden Wassers.

Zur Erzeugung von Strom aus der Energie von Meeresströmungen sind sogenannte Gezeitenkraftwerke bekannt. Dort treibt das bei Ebbe beziehungsweise Flut strömende Wasser eine Turbine an, deren Rotationsbewegung einen Generator antreibt.

Wegen der relativ niedrigen Strömungsgeschwindigkeit lassen sich keine hohen Turbinendrehzahlen erreichen, so daß der Wirkungsgrad niedrig ist.

Es stellt sich die Aufgabe eine Einrichtung der eingangs genannten Art anzugeben, die ohne Turbinen auskommt.

Gelöst wird diese Aufgabe erfindungsgemäß durch die im Anspruch 1 angegebenen Merkmale.

Dort bilden die mit Magneten bestückten Wagen den Ankerteil und die Längsrahmen mit den Spulenwicklungen den Spulenteil eines Lineargenerators, so daß bei quer erstrecktem Flügel die Strömungsenergie des Wassers in elektrische Energie umgewandelt wird. Nach dem die Wagen ein durch die Länge des Rahmengestells vorgegebenes Maß mit quer stehendem Flügel zurückgelegt haben, erfolgt ein Kippen des Flügels um zirka 90 Grad, so daß die Wagen bei nunmehr reduziertem Strömungswiderstand durch die nicht dargestellte Umschaltung des Lineargenerators zu einem Linearmotor wieder in die Anfangsstellung zurückbewegt werden. Hier erfolgt ein Aufrichten des Flügels, so daß der nächste stromerzeugende Bewegungsablauf erfolgen kann. Die elektronische Umsetzung der Energie erfolgt in einer nicht dargestellten, außerhalb des Wassers angeordneten Umrichtereinheit.

Vorzugsweise ist die Einrichtung als Modul aufgebaut und mit anderen Modulen zu einem Kraftwerk zusammenfaßbar.

Jedes Modul hat seinen eigenen Umrichter und die Summe der von den einzelnen Umrichtern ins Netz gespeisten Leistung ergibt die Gesamtleistung. Die Kombination mehrerer Module garantiert, daß sich immer mehrere im Generatorbetrieb und nur wenige kurzzeitig im Motorbetrieb befinden. Ein derartiges Modulkraftwerk kann sowohl in flachen Flußgewässern als auch zum Beispiel in 30 ― 50 m tiefen Meeresströmungen eingesetzt werden. Danach und entsprechend den Strömungsverhältnissen richtet sich die Anzahl und Anordnung der Module.

Das Rahmengestell kann auf seiner der Wasserströmung entgegengerichteten Seite als V-förmiger Verbindungsträger ausgebildet sein.

Mit dieser Maßnahme wird Treibgut vom Flügel weitgehend ferngehalten.

Da bei der Hin- und Herbewegung fortlaufend in nur einer Drehrichtung um 90° weitergedreht wird, erfolgt gleichzeitig ein automatisches "Sichfreischaffen" des Flügels von möglichem Treibgut.

Wenigstens einem Längsrahmen ist am Ende der jeweiligen Fahrstrecke eine Umlenkrolle zur Steuerung der Schwenkbewegung zugeordnet.

Damit der Flügel in der einmal gewählten Stellung bis zum Anlaufen an einer Umlenknocke arretiert bleibt, ist vorgesehen, daß der Flügel mit Federstiften versehen ist, die nach erfolgter Kippbewegung des Flügels in einer Nut des Wagens einrasten.

Zur Unterstützung der Kippbewegung kann die radial nach außen gerichtete Kante des Flügels schaufelartig gebogen sein.

Bei Überschreiten eines vorgebbaren Wertes der Strömungsstärke nimmt der Flügel seine parallel zu den Längsrahmen erstreckte Position ein.

Da er in dieser Position kaum Strömungswiderstand bietet, können bei zu starker Strömung keine Schäden an der Anlage auftreten.

Die Anzahl der hintereinander angeordneten Spulenpakete und damit auch die Länge des Rahmengestells ist in Abhängigkeit der Strömungsverhältnisse variierbar.

Mit dieser Maßnahme wird eine optimale elektrische Ausnutzung der Strömungsenergie erreicht.

Zur Gewährleistung der Wartungsfreiheit und einer großen Betriebseinsatzdauer sind faserverstärkte Verbundwerkstoffe eingesetzt.

Im Gegensatz zur bisherigen Bauweise ähnlicher Anlagen mit schweren Stahlbauteilen bringt die Leichtbauweise mit faserverstärkten Verbundwerkstoffen die erforderliche Festigkeit bei erhöhter Korrosionsbeständigkeit.

Anhand eines Ausführungsbeispieles und der schematischen Zeichnungen Fig. 1 bis 4 wird die erfindungsgemäße Einrichtung beschrieben.

Dabei zeigt:
- Fig. 1: mehrere an einem Ponton hängende Module,
- Fig. 2: eine Seitenansicht eines Moduls,
- Fig. 3: eine Ansicht in Pfeilrichtung III der Fig. 2 und
- Fig. 4: einen Schnitt entlang der Linie IV-IV der Fig. 2 in einem größeren Maßstab.

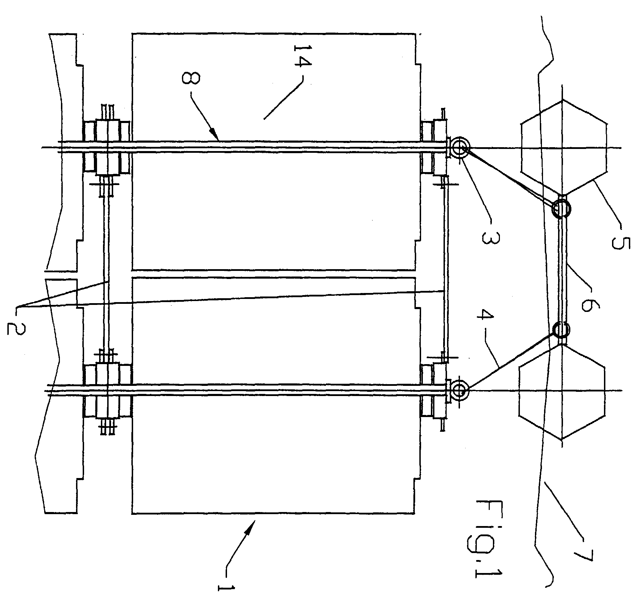

Die Fig. 1 zeigt eine aus mehreren Modulen 1 bestehende Einrichtung. Über Laschen 2 und 26 sind die einzelnen Module miteinander verbunden. An dem jeweiligen Modul zugeordneten Ösen 3 greifen Seile 4 an, die an eine zwei Pontons 5 miteinander verbindende Strebe 6 befestigt sind. Anstatt der Seile 4 können feste Gelenkstreben eingesetzt werden, die den Abstand zum Ponton einhalten. Die an der Wasseroberfläche 7 eines Flusses oder eines Meeres schwimmenden Pontons 5 tragen die Einrichtung.

Zur Stabilisierung in der Strömung können die einzelnen Module mit Gewichten beschwert werden. Der Ponton ist seinerseits mit nicht dargestellten Ankerbefestigungsmitteln zur Vertäuung an einer bestimmten Wasserstelle versehen, so daß die Module der Strömungsrichtung des Wassers folgen können. Die elektrische Energieableitung kann per Grundkabel von der Ankerstelle an Land erfolgen.

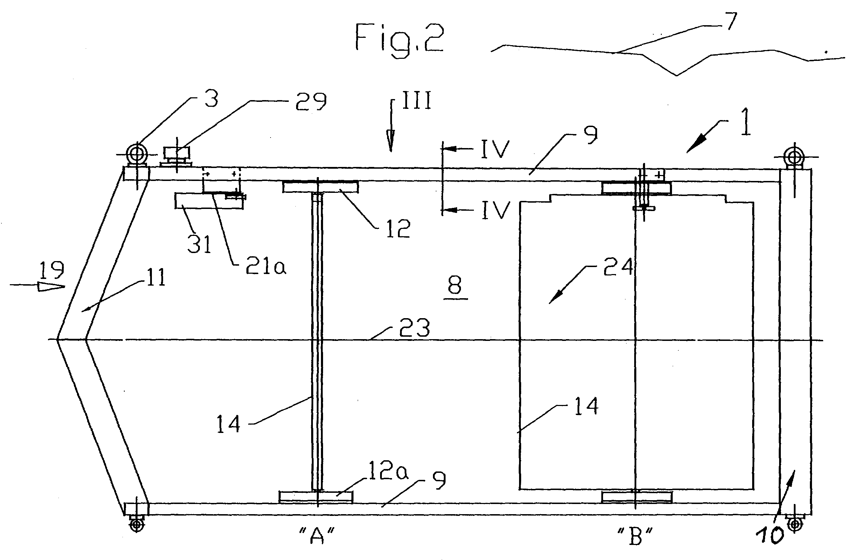

Die Fig. 2 zeigt ein einzelnes Modul 1. Es besteht aus einem Rahmengestell 8, das aus zwei parallel zueinander und parallel zur Wasseroberfläche 7 erstreckten Längsrahmen 9 gebildet ist, die durch eine gerade sowie eine V-förmig ausgebildete Querstrebe 10, 11 miteinander verbunden sind.

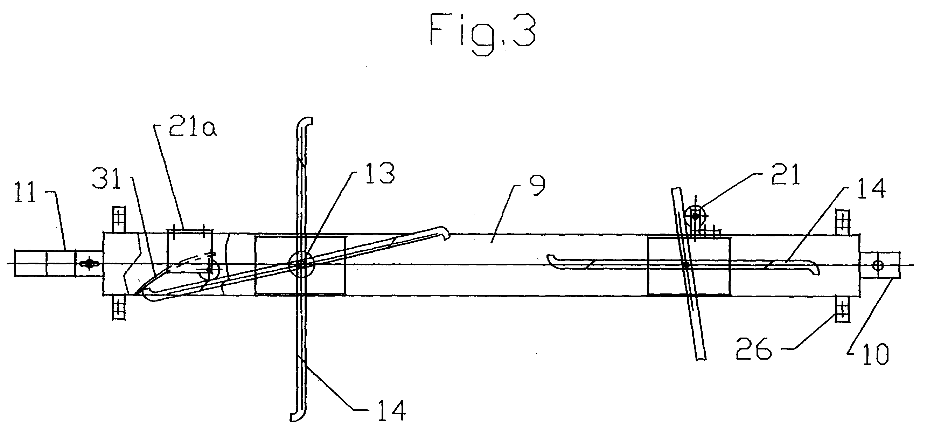

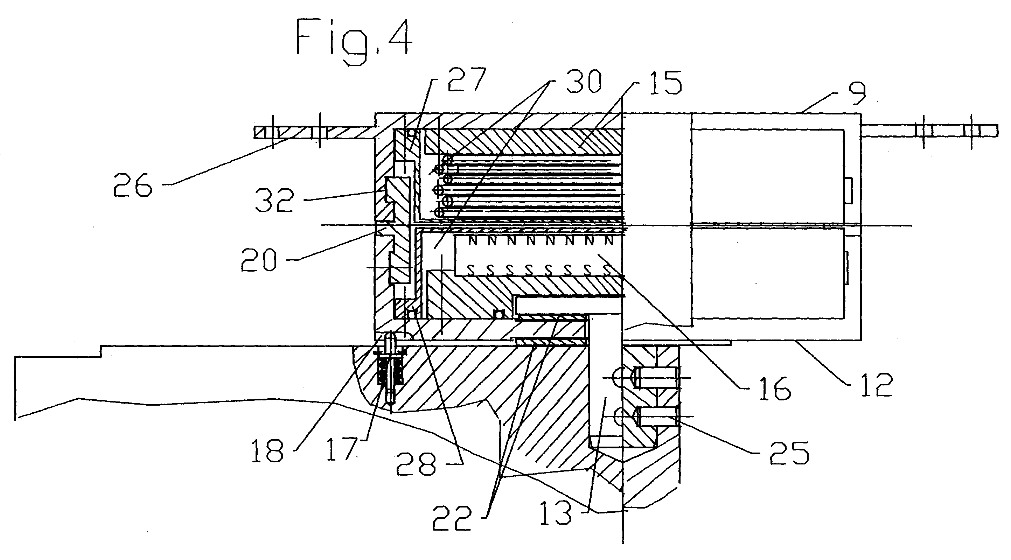

Wie im Zusammenhang mit den Figuren 3 und 4 besser zu erkennen ist, sind einander gegenüberliegend zwei Wagen 12, 12a vorgesehen, die über am Wagen festgelegte Achsbolzen 13 (Fig. 4) einen plattenförmig ausgebildeten, um die Achsbolzen 13 schwenkbaren Flügel 14, (Fig. 3 und 4) zwischen sich aufnehmen. Wagen 12 und 12 a bilden mit dem Flügel 14 eine Bewegungseinheit 24, die formschlüssig und winkelsteif über die Stiftverbindung 25 zwischen Achsbolzen 13 und Flügel 14 hergestellt wird. Die Längsrahmen 9 sind mit Spulenpaketen 15 bestückt, während die die Permanentmagnete 16 aufnehmenden Wagen 12 den Ankerteil eines Lineargenerators darstellen. Der Spulen- und der Ankerteil des Lineargenerators sind mit Abdeckungen 27 und 28 wasserdicht gekapselt, zusätzlich zum Harzverguß 30 der Wicklungen und Permanentmagnete.

Die Fig. 2 und 3 zeigen den Wagen 12 in einer Position "A" mit etwa senkrecht zu einer Längsachse 23 des Rahmengestells 8 verlaufenden Flügelrichtung des Flügels 14. Entsprechend Fig. 4 ist der Flügel 14 mit mindestens einem Federstift 17 ausgestattet, der in eine der jeweils um 90° verteilten Nuten 18 am Boden des Wagens 12 zum Zwecke der Arretierung des Flügels eingreift. Über die Länge der Wagen 12 und 12a ist jeweils an der dem Rahmen 9 zugewandten Seite des Wagens 12, 12a eine Führungsplatte 20 angeschraubt, die die Gleitverbindung zu den Nuten 32 im Rahmen 9 herstellt und damit die achsparallele Führung der Bewegungseinheit 24 im Rahmengestell 8 gewährleisten. Weiterhin dienen die Führungsplatten 20 zur Einstellung des kleinstmöglichen Luftspaltabstandes im Lineargenerator. Das in Pfeilrichtung 19 strömende Wasser drückt die Bewegungseinheit 24, geführt mittels der in Fig. 4 erkennbaren Führungsplatte 20, in eine Position "B". Während dem Fahrweg von "A" nach "B" wird elektrische Energie gewonnen und über eine nicht dargestellte Umrichtereinheit weitergeleitet. Vor Erreichen der Position "B" kontaktet der Flügelschenkel eine dem Rahmen 9 zugeordnete Umlenkrolle 21, wobei der nunmehr einseitig weiterwirkende Strömungsdruck selbsttätig ein Drehmoment erzeugt, das eine Kippbewegung des Flügels 14 um zirka 90 Grad bewirkt, bis die Flügelrichtung parallel zur Rahmenlängserstreckung verläuft. Auch in dieser Position erfolgt eine Festlegung des Flügels 14 über den Federstift 17. Mittels elektronischer Ansteuerung in den Endstellungen der Bewegungseinheit 24 aus der nicht dargestellten Umrichtereinheit wird der Lineargenerator zum Linearmotor geschaltet und bewegt die durch die Parallelerstreckung des Flügels 14 wenig Strömungswiderstand aufweisende Bewegungseinheit 24 gegen die Strömungsrichtung 19 des Wassers von der Position "B" in die Position "A". Über eine Umlenkrolle 21a erfolgt hier aufgrund der Vorschubkraft des Linearmotors eine Kippbewegung des Flügels 14 um zirka 90 Grad in seine arretierbare Quererstreckung, wobei hier die Vorderkante des Flügel 14 zuerst entlang eines Gleitbleches 31 geführt, die Kippbewegung einleitet, und dann die Rolle beim weiteren Andruck die Drehung vollendet, so daß sich der vorher erwähnte stromerzeugende Weg des Wagens 12 zur Position "B" vollziehen kann. Gleitscheiben 22 zwischen Wagen 12 und Flügel 14 dienen der seitlichen und vertikalen Lagerung während der Kippbewegung des Flügels 14.

Die V-förmig ausgebildete Querstrebe 11 des Rahmengestells 8 dient zur Abweisung von Treibgut. Beide Querstreben 10, 11 sind so ausgebildet, daß sie die Formsteifigkeit des Rahmengestells 8 gewährleisten und zur Einhaltung des kleinstmöglichen Luftspaltabstandes im Lineargenerator beitragen und damit den optimalen Magnetkreis für die Spannungserzeugung sicherstellen. Das Rahmengestell 8 dient auch mit einer angedeuteten wasserdichten Steckverbindung 29 zur Herausführung der Generatorableitung und der Steuerkabel.

## Patentansprüche

1. Einrichtung zur Erzeugung von Strom aus der Energie strömenden Wassers, dadurch gekennzeichnet, daß ein Rahmengestell (8) unter der Wasseroberfläche (7) angeordnet ist, daß zwei parallel zueinander und etwa parallel zur Wasseroberfläche erstreckte Längsrahmen (9) des Rahmengestells (8) stationäre Spulenwicklungen tragen, daß jedem Längsrahmen (9) ein mit Magneten (16) bestückter Wagen (12) zugeordnet ist, wobei die Wagen gegenüberliegend angeordnet sind, daß sich ein plattenförmig ausgebildeter Flügel (14) zwischen den Wagen (12) erstreckt und drehbar in ihnen gelagert ist, daß der Flügel zwischen einer senkrecht zu den Längsrahmen (9) und einer parallel zu den Längsrahmen erstreckten Flügelrichtung verdrehbar ist und daß die Wagen (12) zusammen mit dem Flügel (14) bei senkrechter Erstreckung des Flügels (14) in Strömungsrichtung und bei paralleler Erstreckung des Flügels (14) entgegen der Strömungsrichtung bewegbar sind.

2. Einrichtung nach Anspruch 1, dadurch gekennzeichnet, daß sie als Modul (1) aufgebaut ist und mit anderen Modulen zu einem Kraftwerk zusammenfaßbar ist.

3. Einrichtung nach Anspruch 1, dadurch gekennzeichnet, daß das Rahmengestell (8) auf seiner der Wasserströmung entgegengerichteten Seite als V-förmiger Querträger (11) ausgebildet ist.

4. Einrichtung nach Anspruch 1, dadurch gekennzeichnet, daß wenigstens einem Längsrahmen (9) am Ende der jeweiligen Fahrstrecke eine Umlenkrolle (21, 21a) zur Steuerung der Schwenkbewegung des Flügels (14) zugeordnet ist.

5. Einrichtung nach Anspruch 1 oder 4, dadurch gekennzeichnet, daß der Flügel (14) mit Federstiften (17) versehen ist, die nach erfolgter Schwenkbewegung des Flügels in eine Nut (18) des Wagens (12) einrasten.

6. Einrichtung nach einem der Ansprüche 1 bis 5, dadurch gekennzeichnet, daß zur besseren Unterstützung der Schwenkbewegung durch die Strömungskräfte die radial nach außen gerichteten Kanten des Flügels (14) schaufelartig gebogen sind.

7. Einrichtung nach Anspruch 1, dadurch gekennzeichnet, daß die Reibungskräfte infolge dem Gewicht der Bewegungseinheit (24) in den Führungen zwischen Führungsplatten (20) und Längsrahmen (9) durch die in dem Innenraum des Flügels (14) enthaltene Luft minimiert ist.

8. Einrichtung nach Anspruch 1, dadurch gekennzeichnet, daß bei Überschreiten eines vorgebbaren Wertes der Strömungsstärke der Flügel (14) seine parallel zu den Längsrahmen (9) erstreckte Position einnimmt.

9. Einrichtung nach Anspruch 1 oder 3, dadurch gekennzeichnet, daß die Anzahl der hintereinander angeordneten Spulenpakete (15) und damit auch die Länge des Rahmengestells (8) in Abhängigkeit der Strömungsverhältnisse variierbar ist.

10. Einrichtung nach Anspruch 1, dadurch gekennzeichnet, daß zur Gewährleistung der Wartungsfreiheit und einer großen Betriebseinsatzdauer faserverstärkte Verbundwerkstoffe eingesetzt sind.
